# EUROPÄISCHE PATENTSCHRIFT

(11) **EP 3 798 493 B1**
(45) Veröffentlichungstag und Bekanntmachung des Hinweises auf die Patenterteilung: **03.05.2023**
(21) Anmeldenummer: 20192640.9
(22) Anmeldetag: 25.08.2020
(51) Int. Cl.: F16L 41/00, F16L 41/08, A01G 25/02, A62C 35/68

(54) **VORRICHTUNG ZUM BEFESTIGEN EINES BAUTEILS AN EINER FLUIDLEITUNG**
METHOD FOR FIXING A COMPONENT TO A FLUID CONDUIT
DISPOSITIF DE FIXATION D'UN COMPOSANT À UNE CONDUITE DE FLUIDE

(30) Priorität: 24.09.2019 DE 102019214520
(43) Veröffentlichungstag der Anmeldung: 31.03.2021
(73) Patentinhaber: ContiTech Techno-Chemie GmbH, 61184 Karben (DE)
(72) Erfinder: Messerschmidt, Jonathan - c/o Continental AG, 30419 Hannover (DE)
(74) Vertreter: Continental Corporation

(56) Entgegenhaltungen:
- EP-A1- 0 439 090
- DE-A1- 2 063 463
- DE-C3- 2 063 463
- US-A- 3 307 859
- US-A- 3 732 886
- US-A- 5 609 181

## Beschreibung

Die Erfindung betrifft eine Vorrichtung zum Befestigen eines Bauteils an einer Fluidleitung, mit einem Gehäuse, welches einen Leitungsaufnahmebereich zur Aufnahme eines Abschnitts der Fluidleitung und einen Bauteilaufnahmebereich zur Aufnahme des Bauteils aufweist.

Ferner betrifft die Erfindung eine Leitungsbaugruppe mit einer Fluidleitung, einem Bauteil und einer Vorrichtung, mittels welcher das Bauteil an der Fluidleitung befestigt ist.

Darüber hinaus betrifft die Erfindung ein Verfahren zum Befestigen eines Bauteils an einer Fluidleitung mittels einer Vorrichtung zum Befestigen eines Bauteils an einer Fluidleitung, mit den Schritten: Positionieren eines Abschnitts der Fluidleitung innerhalb eines Leitungsaufnahmebereichs eines Gehäuses der Vorrichtung und Positionieren des Bauteils in einem Bauteilaufnahmebereich des Gehäuses der Vorrichtung.

In der Fluidtechnik ist es in einer Vielzahl von Anwendungsfällen erforderlich, Bauteile, wie beispielsweise Sensoren oder Ventile, an einer Fluidleitung zu befestigen. Abhängig von dem spezifischen Anwendungsfall erfolgt die Befestigung solcher Bauteile an der Fluidleitung bisher über Löt- oder Laserschweißverfahren.

Wenn ein Lötverfahren zum Befestigen eines Bauteils an einer Fluidleitung zum Einsatz kommt, entstehen regelmäßig hohe Prozess- und Qualitätssicherungskosten. Aufgrund der erforderlichen geringen Toleranzen kommt es beim Laserschweißen häufig zu hohen Bauteilkosten. Folglich ist man in der Praxis bestrebt, in diesem Zusammenhang Alternativlösungen zum Löten und Laserschweißen zu finden.

Die der Erfindung zugrundeliegende Aufgabe besteht somit darin, die Befestigung von Bauteilen an Fluidleitungen zu vereinfachen und/oder zu beschleunigen.

Die Aufgabe wird durch eine Vorrichtung mit den Merkmalen des Anspruchs 1 gelöst. Bevorzugte Ausführungsformen sind in den abhängigen Ansprüchen definiert.

Die Erfindung macht sich die Erkenntnis zunutze, dass durch ein Gehäuse, welches zumindest in der Peripherie des Leitungsaufnahmebereichs verformbar ist, eine form- und/oder kraftschlüssige Verbindung zwischen dem Gehäuse der Vorrichtung und der Fluidleitung herstellbar ist, sodass auf eine stoffschlüssige Verbindung mittels Löten oder Laserschweißen verzichtet werden kann. Die Befestigung bzw. die Montage des Bauteils an der Fluidleitung wird somit erheblich vereinfacht und beschleunigt. Dies führt letztendlich auch zu einer Zeit- und Kostenreduzierung der gesamten Montage.

Zum form- und/oder kraftschlüssigen Fixieren des Abschnitts der Fluidleitung in dem Leitungsaufnahmebereich des Gehäuses werden Teilbereiche des Gehäuses verformt. Die Verformung ist dabei eine plastische Verformung, wobei die Verformung auch elastische Bestandteile aufweisen kann. Das Gehäuse kann einstückig oder mehrteilig ausgebildet sein. Das Gehäuse kann teilweise oder vollständig aus einem plastisch verformbaren Kunststoff ausgebildet sein. Ferner kann das Gehäuse aus einem Metall oder einer Metalllegierung ausgebildet sein.

Das Bauteil kann in den Bauteilaufnahmebereich des Gehäuses von außen eingesetzt werden. Alternativ kann das Bauteil auch in den Bauteilaufnahmebereich des Gehäuses eingebettet werden oder in das Gehäuse integriert sein. Das Gehäuse und das Bauteil können reversibel und zerstörungsfrei lösbar oder alternativ unlösbar miteinander verbunden sein.

Erfindungsgemäß weist das Gehäuse zwei gegenüberliegende Befestigungsstege auf, wobei sich der Leitungsaufnahmebereich zwischen den Befestigungsstegen befindet. Vorzugsweise sind die Befestigungsstege länglich ausgebildet und erstrecken sich über einen Befestigungsabschnitt in Längsrichtung bzw. Axialrichtung der Fluidleitung. Vorzugsweise begrenzen die Befestigungsstege den Leitungsaufnahmebereich zumindest seitlich. Die Befestigungsstege definieren vorzugsweise eine Einsetzöffnung für die Fluidleitung, durch welche die Fluidleitung in den Leitungsaufnahmebereich einsetzbar ist. Durch die Befestigungsstege und die Einsetzöffnung ist ein schnelles und gleichzeitig lagerichtiges Einbringen der Fluidleitung in das Gehäuse möglich.

Erfindungsgemäß sind die Befestigungsstege zum kraft- und/oder formschlüssigen Fixieren des Abschnitts der Fluidleitung in dem Leitungsaufnahmebereich des Gehäuses plastisch verformbar. Durch die plastische Verformung der Befestigungsstege erfolgt vorzugsweise eine Verpressung und/oder Verstemmung des in dem Leitungsaufnahmebereich befindlichen Abschnitts der Fluidleitung. Die Verpressung und/oder Verstemmung erfolgt durch das Beaufschlagen der Befestigungsstege mit einer externen Kraft. Durch das plastische Verformen der Befestigungsstege wird vorzugsweise der Abstand der Befestigungsstege zueinander reduziert, sodass es auch zu einer Verklemmung des sich in dem Leitungsaufnahmebereich befindlichen Abschnitts der Fluidleitung kommt. Bei der plastischen Verformung der Befestigungsstege kann es auch zu einer Verformung der Fluidleitung kommen. Die Fluidleitung kann dabei je nach Ausbildung elastisch und/oder plastisch verformt werden. Die Verformung der Fluidleitung kann zu einer Veränderung des Leitungsquerschnitts führen, sodass der Leitungsquerschnitt beispielsweise gestaucht wird. Bei der Verstemmung erfolgt die plastische Verformung der Befestigungsstege und/oder der Fluidleitung vorzugsweise in einer Weise, dass die Befestigungsstege und die Fluidleitung sich unlösbar ineinander verkeilen. Die Befestigungsstege können zum Fixieren des Abschnitts der Fluidleitung in dem Leitungsaufnahmebereich des Gehäuses torsionsfrei verformbar sein.

Erfindungsgemäß weisen die Befestigungsstege auf der dem Leitungsaufnahmebereich zugewandten Seite jeweils eine oder mehrere, insbesondere längliche, Vertiefungen und/oder Erhöhungen an deren Oberfläche auf. Die Vertiefungen und/oder Erhöhungen an der Oberfläche der Befestigungsstege erstrecken sich vorzugsweise in Längs- bzw. Axialrichtung, d. h. parallel zur Fluidleitung. Die Vertiefungen und/oder Erhöhungen bilden eine Versteifungsstruktur aus, über welche eine Torsion der Befestigungsstege beim Verpressen und/oder Verstemmen der Fluidleitung vermieden werden kann. Beispielsweise sind die Vertiefungen als Versteifungsnuten ausgebildet.

In einer bevorzugten Ausführungsform der erfindungsgemäßen Vorrichtung sind der Leitungsaufnahmebereich und der Bauteilaufnahmebereich mittels zumindest eines Verbindungskanals miteinander verbunden. Der Leitungsaufnahmebereich und der Bauteilaufnahmebereich können grundsätzlich mit einer oder mehreren Verbindungskanälen verbunden sein. Über den zumindest einen Verbindungskanal kann beispielsweise ein als Sensor oder Ventil ausgebildetes Bauteil in dem Bauteilaufnahmebereich fluidleitend mit dem Innenraum der Fluidleitung verbunden werden. In diesem Fall weist die Fluidleitung in ihrem Leitungsmantel vorzugsweise eine Ausnehmung auf, welche sich im Bereich einer Kanalöffnung des zumindest einen Verbindungskanals befindet. Ferner kann sich durch den zumindest einen Verbindungskanal ein Messfühler eines als Sensor ausgebildeten Bauteils, welches in dem Bauteilaufnahmebereich des Gehäuses angeordnet ist, erstrecken. Auf diese Weise kann beispielsweise eine Temperaturmessung des Fluids innerhalb der Fluidleitung erfolgen. Ferner kann der zumindest eine Verbindungskanal zur Erfassung eines Fluiddrucks Verwendung finden.

Es ist außerdem eine erfindungsgemäße Vorrichtung vorteilhaft, welche eine Dichtung aufweist, wobei die Dichtung um eine Kanalöffnung des zumindest einen Verbindungskanals umläuft. Die Kanalöffnung des zumindest einen Verbindungskanals befindet sich dabei vorzugsweise auf der dem Leitungsaufnahmebereich zugewandten Seite des Verbindungskanals. Vorzugsweise ist die Dichtung ein Dichtring. Die Dichtung ist vorzugsweise aus einem elastisch verformbaren Dichtungsmaterial ausgebildet. Vorzugsweise ist die Dichtung in einer umlaufenden Dichtungsnut des Gehäuses angeordnet, wobei die Dichtungsnut dem Leitungsaufnahmebereich zugewandt ist. Alternativ oder zusätzlich kann die Dichtung auch in einer Dichtungsnut auf der Mantelfläche der Fluidleitung angeordnet sein. Nach dem Einsetzen der Fluidleitung in den Leitungsaufnahmebereich befindet sich die Dichtung zwischen einem Dichtungsabschnitt des Gehäuses und der Fluidleitung. Durch die Geometrie des Gehäuses und des Pressvorgangs wird die Leitung beim Verpressen und/oder Verstemmen der Fluidleitung gegen die Dichtung gepresst.

Die der Erfindung zugrundeliegende Aufgabe wird ferner durch eine Leitungsbaugruppe der eingangs genannten Art gelöst, wobei die Vorrichtung der erfindungsgemäßen Leitungsbaugruppe nach einer der vorstehend beschriebenen Ausführungsformen ausgebildet ist. Hinsichtlich der Vorteile und Modifikationen der erfindungsgemäßen Leitungsbaugruppe wird somit zunächst auf die Vorteile und Modifikationen der erfindungsgemäßen Vorrichtung verwiesen.

Bei der erfindungsgemäßen Leitungsbaugruppe ist ein Abschnitt der Fluidleitung in dem Leitungsaufnahmebereich des Gehäuses angeordnet. Ferner ist das Bauteil in dem Bauteilaufnahmebereich des Gehäuses angeordnet. Das Bauteil kann in den Bauteilaufnahmebereich des Gehäuses von außen eingesetzt sein. Alternativ kann das Bauteil auch in den Bauteilaufnahmebereich des Gehäuses eingebettet sein oder in das Gehäuse integriert sein. Das Gehäuse und das Bauteil können reversibel und zerstörungsfrei lösbar oder alternativ unlösbar miteinander verbunden sein.

Das Bauteil kann beispielsweise ein Sensor, etwa ein Temperatur- oder Drucksensor, sein. Ferner kann das Bauteil ein Ventil, beispielsweise ein Füllventil, sein. Die Fluidleitung kann beispielsweise ein Rohr oder ein Schlauch sein.

In einer bevorzugten Ausführungsform der erfindungsgemäßen Leitungsbaugruppe weist die Fluidleitung einen umlaufenden Leitungsmantel auf, wobei sich innerhalb des sich in dem Leitungsaufnahmebereich befindenden Abschnitts des Leitungsmantels eine Ausnehmung befindet. Über die Ausnehmung in dem Leitungsmantel und den zumindest einen Verbindungskanal in dem Gehäuse ist der Innenraum der Fluidleitung mit dem Bauteilaufnahmebereich des Gehäuses und/oder mit dem Bauteil in dem Bauteilaufnahmebereich verbunden.

Die der Erfindung zugrundeliegende Aufgabe wird ferner durch ein Verfahren der eingangs genannten Art gelöst, wobei im Rahmen des erfindungsgemäßen Verfahrens das Gehäuse der Vorrichtung zum form- und/oder kraftschlüssigen Fixieren des Abschnitts der Fluidleitung in dem Leitungsaufnahmebereich des Gehäuses verformt wird. Bei dem erfindungsgemäßen Verfahren wird eine Vorrichtung zum Befestigen eines Bauteils an einer Fluidleitung nach einer der vorstehend beschriebenen Ausführungsformen verwendet. Hinsichtlich der Vorteile und Modifikationen des erfindungsgemäßen Verfahrens wird somit zunächst auf die Vorteile und Modifikationen der erfindungsgemäßen Vorrichtung verwiesen.

Das Bauteil kann während der Herstellung oder nach der Herstellung des Gehäuses in dem Bauteilaufnahmebereich positioniert werden. Wenn das Bauteil in das Gehäuse eingebettet oder integriert werden soll, erfolgt das Positionieren des Bauteils in dem Bauteilaufnahmebereich vorzugsweise während der Herstellung des Gehäuses. Wenn das Bauteil von außen in den Bauteilaufnahmebereich eingesetzt werden soll, erfolgt das Positionieren des Bauteils in dem Bauteilaufnahmebereich vorzugsweise nach der Herstellung des Gehäuses.

In einer bevorzugten Ausführungsform des erfindungsgemäßen Verfahrens umfasst das Verformen des Gehäuses der Vorrichtung das Verformen von zwei gegenüberliegenden Befestigungsstegen des Gehäuses. Der sich in dem Leitungsaufnahmeabschnitt des Gehäuses befindende Abschnitt der Fluidleitung ist zwischen den Befestigungsstegen positioniert.

Das erfindungsgemäße Verfahren wird ferner dadurch vorteilhaft weitergebildet, dass das Verformen der zwei gegenüberliegenden Befestigungsstege des Gehäuses zu einer plastischen Verformung der Befestigungsstege des Gehäuses führt. Alternativ oder zusätzlich führt das Verformen der zwei gegenüberliegenden Befestigungsstege des Gehäuses zu einer elastischen und/oder plastischen Verformung des sich in dem Leitungsaufnahmebereich des Gehäuses befindenden Abschnitts der Fluidleitung. Ferner kann das Verformen der zwei gegenüberliegenden Befestigungsstege des Gehäuses zu einem Verpressen und/oder Verstemmen des sich in dem Leitungsaufnahmebereich des Gehäuses befindenden Abschnitts der Fluidleitung zwischen den Befestigungsstegen führen. Das Verformen der zwei gegenüberliegenden Befestigungsstege des Gehäuses führt vorzugsweise zu einer Abstandsverringerung zwischen den zwei gegenüberliegenden Befestigungsstegen. Das Verformen der zwei gegenüberliegenden Befestigungsstege kann auch zu einer Querschnittsänderung der Fluidleitung innerhalb des in dem Leitungsaufnahmebereich angeordneten Abschnitts führen.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausführungsbeispiel der erfindungsgemäßen Vorrichtung vor dem Fixieren einer Fluidleitung in einem Leitungsaufnahmebereich der Vorrichtung;
- Fig. 2: die in der Fig. 1 abgebildete Vorrichtung nach dem Fixieren der Fluidleitung in dem Leitungsaufnahmebereich der Vorrichtung;
- Fig. 3: ein weiteres Ausführungsbeispiel der erfindungsgemäßen Vorrichtung vor dem Fixieren einer Fluidleitung in einem Leitungsaufnahmebereich der Vorrichtung; und
- Fig. 4: die in der Fig. 3 abgebildete Vorrichtung nach dem Fixieren der Fluidleitung in dem Leitungsaufnahmebereich der Vorrichtung.

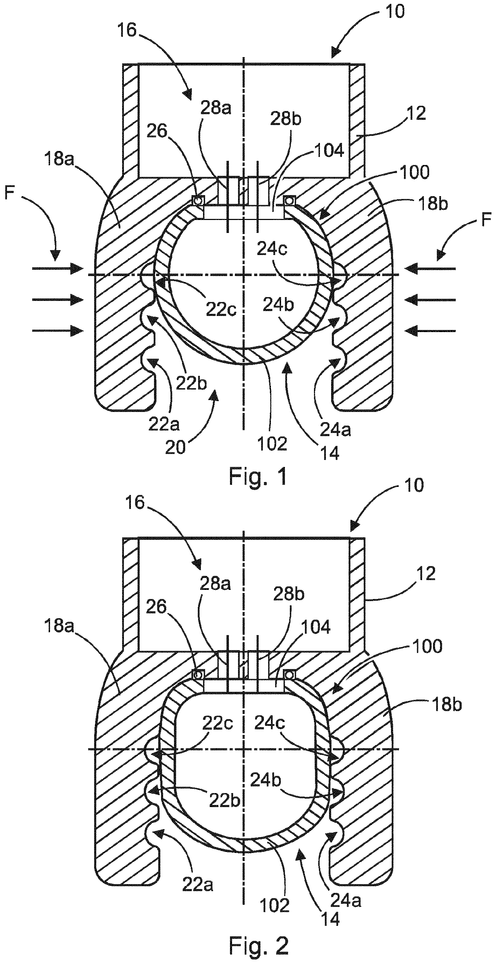

Die Fig. 1 und 2 zeigen eine Vorrichtung 10 zum Befestigen eines Bauteils an einer Fluidleitung 100.

Bei dem in der Fig. 1 dargestellten Zustand ist ein Abschnitt der Fluidleitung 100 in einem Leitungsaufnahmebereich 14 eines Gehäuses 12 der Vorrichtung 10 angeordnet, wobei der Abschnitt der Fluidleitung 100 noch nicht in dem Leitungsaufnahmebereich 14 fixiert ist.

Das Gehäuse 12 der Vorrichtung 10 ist ein plastisch verformbarer Körper, welcher beispielsweise aus Kunststoff, Metall und/oder einer Metalllegierung ausgebildet sein kann. Grundsätzlich kann das Gehäuse 12 einstückig oder mehrteilig ausgebildet sein, wobei in den Figuren ein einstückiges Gehäuse 12 dargestellt ist.

Ferner weist das Gehäuse 12 der Vorrichtung 10 einen Bauteilaufnahmebereich 16 zur Aufnahme des Bauteils auf. Das Bauteil kann beispielsweise ein Sensor, etwa ein Temperatur- oder Drucksensor, oder ein Ventil sein. Das Bauteil kann teilweise oder vollständig in den Bauteilaufnahmebereich 16 des Gehäuses 12 eingesetzt werden. Der Leitungsaufnahmebereich 14 und der Bauteilaufnahmebereich 16 sind über zwei Verbindungskanäle 28a, 28b miteinander verbunden. Eine als Dichtring ausgebildete Dichtung 26 läuft um die Kanalöffnungen der Verbindungskanäle 28a, 28b um, welche sich auf der dem Leitungsaufnahmebereich 14 zugewandten Seite der Verbindungskanäle 28a, 28b befinden. Die Dichtung 26 ist in einer umlaufenden Dichtungsnut des Gehäuses 12 angeordnet, wobei die Dichtungsnut dem Leitungsaufnahmebereich 14 und somit der Fluidleitung 100 zugewandt ist. Im eingesetzten Zustand der Fluidleitung 100, welcher in der Fig. 1 dargestellt ist, befindet sich die Dichtung 26 zwischen einem Dichtungsabschnitt des Gehäuses 12 und der Fluidleitung 100.

Das Gehäuse 12 der Vorrichtung 10 weist zwei gegenüberliegende Befestigungsstege 18a, 18b auf, wobei sich der Leitungsaufnahmebereich 14 und der in den Leitungsaufnahmebereich 14 eingesetzte Abschnitt der Fluidleitung 100 zwischen den Befestigungsstegen 18a, 18b befinden. Die Befestigungsstege 18a, 18b sind länglich ausgebildet und erstrecken sich über einen Befestigungsabschnitt in Längs- bzw. Axialrichtung und somit parallel zur Fluidleitung 100. Die Befestigungsstege 18a, 18b definieren eine Einsetzöffnung 20, über welche die Fluidleitung 100 in den Leitungsaufnahmebereich 14 des Gehäuses 12 einsetzbar ist. Durch die Befestigungsstege 18a, 18b und die Einsetzöffnung 20 ist ein schnelles und gleichzeitig lagerichtiges Einbringen der Fluidleitung 100 in das Gehäuse 12 möglich.

Der Abschnitt der Fluidleitung 100, welcher sich in dem Leitungsaufnahmebereich 14 befindet, ist durch eine Verformung des Gehäuses 12 in dem Leitungsaufnahmebereich 14 form- und kraftschlüssig fixierbar. Die Befestigungsstege 18a, 18b sind zum form- und kraftschlüssigen Fixieren des Abschnitts der Fluidleitung 100 in dem Leitungsaufnahmebereich 14 des Gehäuses 12 plastisch verformbar. Über die extern auf die Befestigungsstege 18a, 18b aufgebrachten Kräfte F wird die plastische Verformung der Befestigungsstege 18a, 18b verursacht. Die auf die Befestigungsstege 18a, 18b aufgebrachten externen Kräfte F können in Radialrichtung und/oder quer zur Axial- bzw. Längsrichtung der Fluidleitung wirken. Die auf den Befestigungssteg 18a wirkenden Kräfte F und die auf den Befestigungssteg 18b wirkenden Kräfte F wirken in Richtung der Fluidleitung 100. Die Körper, mit welchen die Kräfte F auf die Befestigungsstege 18a, 18b aufgebracht werden, weisen vorzugsweise jeweils eine plane Kontaktfläche für die Befestigungsstege 18a, 18b auf.

Die Befestigungsstege 18a, 18b weisen auf der dem Leitungsaufnahmebereich 14 und somit auch auf der der Fluidleitung 100 zugewandten Seite jeweils mehrere längliche Vertiefungen 22a-22c, 24a-24c an deren Oberfläche auf. Die Vertiefungen 22a-22c, 24a-24c sind Versteifungsnuten, welche dazu führen, dass die Befestigungsstege 18a, 18b bei Beaufschlagung mit den Kräften F im Wesentlichen torsionsfrei verformt werden.

Die Fig. 2 zeigt einen Zustand, bei welchem der Abschnitt der Fluidleitung 100 durch eine Verformung der Befestigungsstege 18a, 18b in dem Leitungsaufnahmebereich 14 fixiert ist. Durch die Beaufschlagung der Befestigungsstege 18a, 18b mit den externen Kräften F hat eine Verstemmung stattgefunden, bei welcher sich die Oberflächen der Befestigungsstege 18a, 18b und die Oberfläche der Fluidleitung 100 unlösbar ineinander verkeilt haben. Außerdem ist es zu einer Verformung der Fluidleitung 100 gekommen, welche zu einer Veränderung des Querschnitts der Fluidleitung 100 geführt hat.

Trotz der Krafteinwirkung haben sich die Verbindungsstege 18a, 18b im Bereich ihrer Endabschnitte nicht um die Fluidleitung 100 gelegt, sondern haben ihre Parallelausrichtung zueinander beibehalten.

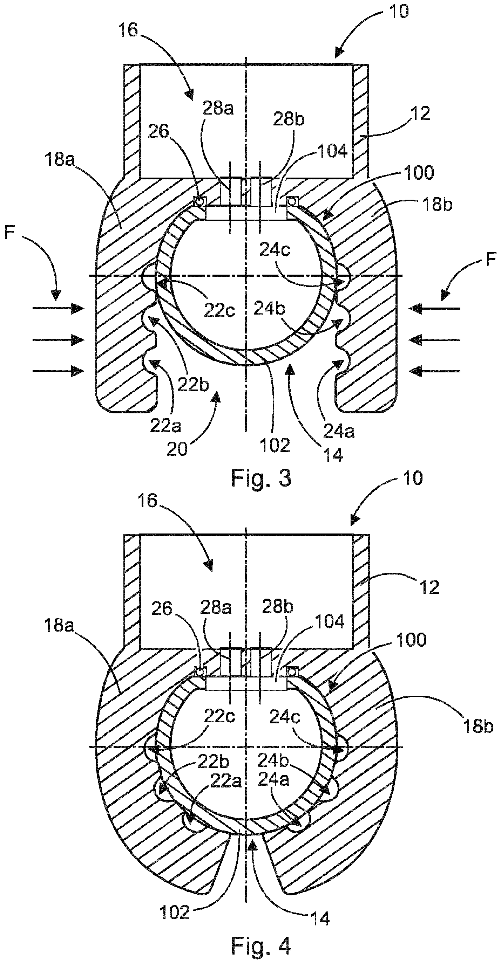

Die Fig. 3 und 4 zeigen eine alternative Vorrichtung 10, bei welcher die Beaufschlagung der Befestigungsstege 18a, 18b mit den externen Kräften F dazu führt, dass sich die Innenkonturen der Befestigungsstege 18a, 18b an die Außenkontur der Fluidleitung 100 anpassen. Der Abschnitt der Fluidleitung 100, welcher innerhalb des Leitungsaufnahmebereichs 14 des Gehäuses 12 angeordnet ist, ist in diesem Fall durch eine Verformung der Befestigungsstege 18a, 18b formschlüssig in dem Leitungsaufnahmebereich 14 fixiert. Der Formschluss erfolgt dabei durch das Erzeugen einer Biegung in den Endabschnitten der Befestigungsstege 18a, 18b. Der erzeugte Formschluss wirkt in radialer Richtung.

Die auf die Befestigungsstege 18a, 18b zur Fixierung der Fluidleitung 100 aufgebrachten Kräfte F sind erneut entgegengesetzt ausgerichtet. Alternativ oder zusätzlich zu den dargestellten Kräften F, welche sich lediglich in Querrichtung erstrecken, können zum Verformen der Befestigungsstege 18a, 18b auch Kräfte aufgebracht werden, welche in andere Radialrichtungen wirken.

Die Körper, mit welchen die Kräfte F auf die Befestigungsstege 18a, 18b aufgebracht werden, können eine plane oder eine gebogene Kontaktfläche für die Befestigungsstege 18a, 18b aufweisen.

Bei der in den Fig. 3 und 4 dargestellten Leitungsbefestigung kommt es zu keiner oder lediglich zu einer geringfügigen Deformation der Fluidleitung 100, sodass der Leitungsquerschnitt durch die Leitungsbefestigung nicht oder nur unwesentlich verändert wird.

Die Fluidleitung 100 weist einen umlaufenden Leitungsmantel 102 auf, wobei innerhalb des sich in dem Leitungsaufnahmebereich 14 befindenden Abschnitt des Leitungsmantels 102 eine Ausnehmung 104 vorhanden ist. Über die Ausnehmung 104 in dem Leitungsmantel 102 und die Verbindungskanäle 28a, 28b in dem Gehäuse 12 ist der Innenraum der Fluidleitung 100 mit dem Bauteilaufnahmebereich 16 des Gehäuses 12 bzw. mit dem Bauteil in dem Bauteilaufnahmebereich 16 verbindbar. Beispielsweise können sich durch die Verbindungskanäle 28a, 28b Messfühler eines als Sensor ausgebildeten Bauteils erstrecken, welches in dem Bauteilaufnahmebereich 16 angeordnet ist. Das Bauteil kann beispielsweise ein Temperatursensor oder ein Drucksensor sein.

### Bezugszeichenliste

- 10: Vorrichtung
- 12: Gehäuse
- 14: Leitungsaufnahmebereich
- 16: Bauteilaufnahmebereich
- 18a, 18b: Befestigungsstege
- 20: Einsetzöffnung
- 22a-22c: Vertiefungen
- 24a-24c: Vertiefungen
- 26: Dichtung
- 28a, 28b: Verbindungskanäle

- 100: Fluidleitung
- 102: Leitungsmantel
- 104: Ausnehmung

- F: Kräfte

## Patentansprüche

1. Vorrichtung (10) zum Befestigen eines Bauteils an einer Fluidleitung (100), mit
- einem Gehäuse (12), welches einen Leitungsaufnahmebereich (14) zur Aufnahme eines Abschnitts der Fluidleitung (100) und einen Bauteilaufnahmebereich (16) zur Aufnahme des Bauteils aufweist,
wobei der Abschnitt der Fluidleitung (100) durch eine Verformung des Gehäuses (12) in dem Leitungsaufnahmebereich (14) form- und/oder kraftschlüssig fixierbar ist und
das Gehäuse (12) zwei gegenüberliegende Befestigungsstege (18a, 18b) aufweist, wobei sich der Leitungsaufnahmebereich (14) zwischen den Befestigungsstegen (18a, 18b) befindet, wobei die Befestigungsstege (18a, 18b) zum kraft- und/oder formschlüssigen Fixieren des Abschnitts der Fluidleitung (100) in dem Leitungsaufnahmebereich (14) des Gehäuses (12) plastisch verformbar sind,
**dadurch gekennzeichnet, dass** die Befestigungsstege (18a, 18b) auf der dem Leitungsaufnahmebereich (14) zugewandten Seite jeweils eine oder mehrere, insbesondere längliche, Vertiefungen (22a-22c, 24a-24c) und/oder Erhöhungen an deren Oberfläche aufweisen.

2. Vorrichtung (10) nach Anspruch 1,
**dadurch gekennzeichnet, dass** der Leitungsaufnahmebereich (14) und der Bauteilaufnahmebereich (16) mittels zumindest eines Verbindungskanals (28a, 28b) miteinander verbunden sind.

3. Vorrichtung (10) nach Anspruch 2,
**gekennzeichnet durch** eine Dichtung (26), welche um eine Kanalöffnung des zumindest einen Verbindungskanals (28a, 28b) umläuft, welche sich auf der dem Leitungsaufnahmebereich (14) zugewandten Seite befindet.

4. Leitungsbaugruppe, mit
- einer Fluidleitung (100);
- einem Bauteil; und
- einer Vorrichtung (10), mittels welcher das Bauteil an der Fluidleitung (100) befestigt ist;
**dadurch gekennzeichnet, dass** die Vorrichtung (10) nach einem der vorstehenden Ansprüche ausgebildet ist.

5. Verfahren zum Befestigen eines Bauteils an einer Fluidleitung (100) mittels einer Vorrichtung (10) nach einem der Ansprüche 1 bis 3 zum Befestigen eines Bauteils an einer Fluidleitung (100) mit den Schritten:
- Positionieren eines Abschnitts der Fluidleitung (100) innerhalb eines Leitungsaufnahmebereichs (14) eines Gehäuses (12) der Vorrichtung (10); und
- Positionieren des Bauteils in einem Bauteilaufnahmebereich (16) des Gehäuses (12) der Vorrichtung (10);
**gekennzeichnet durch** den Schritt:
- Verformen des Gehäuses (12) der Vorrichtung (10) zum form- und/oder kraftschlüssigen Fixieren des Abschnitts der Fluidleitung (100) in dem Leitungsaufnahmebereich (14) des Gehäuses (12).

6. Verfahren nach Anspruch 5,
**dadurch gekennzeichnet, dass** das Verformen des Gehäuses (12) der Vorrichtung (10) das Verformen von zwei gegenüberliegenden Befestigungsstegen (18a, 18b) des Gehäuses (12) umfasst, wobei der sich in dem Leitungsaufnahmebereich (14) des Gehäuses (12) befindende Abschnitt der Fluidleitung (100) zwischen den Befestigungsstegen (18a, 18b) positioniert ist.

7. Verfahren nach Anspruch 6,
**dadurch gekennzeichnet, dass** das Verformen der zwei gegenüberliegenden Befestigungsstege (18a, 18b) des Gehäuses (12) zu
- einer plastischen Verformung der Befestigungsstege (18a, 18b) des Gehäuses (12);
- einer elastischen und/oder plastischen Verformung des sich in dem Leitungsaufnahmebereich (14) des Gehäuses (12) befindenden Abschnitts der Fluidleitung (100); und/oder
- einem Verpressen und/oder Verstemmen des sich in dem Leitungsaufnahmebereich (14) des Gehäuses (12) befindenden Abschnitts der Fluidleitung (100) zwischen den Befestigungsstegen (18a, 18b)
führt.

## Claims

1. Apparatus (10) for fastening a component to a fluid line (100), having
- a housing (12) which has a line-accommodating region (14) for accommodating a portion of the fluid line (100) and has a component-accommodating region (16) for accommodating the component,
wherein the portion of the fluid line (100) is able to be fixed in a form-fitting and/or force-fitting manner in the line-accommodating region (14) by way of a deformation of the housing (12), and
the housing (12) has two oppositely situated fastening webs (18a, 18b), wherein the line-accommodating region (14) is situated between the fastening webs (18a, 18b), wherein, for force-fitting and/or form-fitting fixing of the portion of the fluid line (100) in the line-accommodating region (14) of the housing (12), the fastening webs (18a, 18b) are plastically deformable,
**characterized in that**, on the side facing towards the line-accommodating region (14), the fastening webs (18a, 18b) each have one or more in particular elongate depressions (22a-22c, 24a-24c) and/or elevations on their surface.

2. Apparatus (10) according to Claim 1,
**characterized in that** the line-accommodating region (14) and the component-accommodating region (16) are connected to one another by means of at least one connecting channel (28a, 28b).

3. Apparatus (10) according to Claim 2,
**characterized by** a seal (26) which runs in an encircling manner around a channel opening of the at least one connecting channel (28a, 28b), which channel opening is situated on the side facing towards the line-accommodating region (14).

4. Line assembly, having
- a fluid line (100);
- a component; and
- an apparatus (10) by means of which the component is fastened to the fluid line (100);
**characterized in that** the apparatus (10) is designed according to one of the preceding claims.

5. Method for fastening a component to a fluid line (100) by means of an apparatus (10) according to one of Claims 1 to 3 for fastening a component to a fluid line (100), comprising the steps of:
- positioning a portion of the fluid line (100) within a line-accommodating region (14) of a housing (12) of the apparatus (10); and
- positioning the component in a component-accommodating region (16) of the housing (12) of the apparatus (10);
**characterized by** the step of:
- deforming the housing (12) of the apparatus (10) for form-fitting and/or force-fitting fixing of the portion of the fluid line (100) in the line-accommodating region (14) of the housing (12).

6. Method according to Claim 5,
**characterized in that** deforming the housing (12) of the apparatus (10) comprises deforming two oppositely situated fastening webs (18a, 18b) of the housing (12), wherein the portion of the fluid line (100) that is situated in the line-accommodating region (14) of the housing (12) is positioned between the fastening webs (18a, 18b).

7. Method according to Claim 6,
**characterized in that** deforming the two oppositely situated fastening webs (18a, 18b) of the housing (12) leads to
- the fastening webs (18a, 18b) of the housing (12) being plastically deformed;
- the portion of the fluid line (100) situated in the line-accommodating region (14) of the housing (12) being elastically and/or plastically deformed; and/or
- the portion of the fluid line (100) situated in the line-accommodating region (14) of the housing (12) being pressed and/or caulked between the fastening webs (18a, 18b).

## Revendications

1. Dispositif (10) pour fixer un composant à une conduite de fluide (100), avec
- un boîtier (12), qui présente une zone de réception de conduite (14) pour recevoir une section de la conduite de fluide (100) et une zone de réception de composant (16) pour recevoir le composant,
la section de la conduite de fluide (100) pouvant être fixée par une déformation du boîtier (12) dans la zone de réception de conduite (14) par complémentarité de forme et/ou par adhérence et
le boîtier (12) présentant deux barrettes de fixation (18a, 18b) opposées, la zone de réception de conduite (14) se trouvant entre les barrettes de fixation (18a, 18b), les barrettes de fixation (18a, 18b) étant déformables plastiquement pour la fixation par adhérence et/ou par complémentarité de forme de la section de la conduite de fluide (100) dans la zone de réception de conduite (14) du boîtier (12), **caractérisé en ce que** les barrettes de fixation (18a, 18b) présentent chacune, sur le côté tourné vers la zone de réception de conduite (14), un ou plusieurs renfoncements (22a-22c, 24a-24c) et/ou des bossages, notamment allongés, sur leur surface.

2. Dispositif (10) selon la revendication 1, **caractérisé en ce que** la zone de réception de conduite (14) et la zone de réception de composant (16) sont reliées entre elles au moyen d'au moins un canal de liaison (28a, 28b).

3. Dispositif (10) selon la revendication 2, **caractérisé par** un joint d'étanchéité (26) qui s'étend tout autour d'une ouverture de canal de l'au moins un canal de liaison (28a, 28b), qui se trouve sur le côté tourné vers la zone de réception de conduite (14).

4. Ensemble de conduite, avec
- une conduite de fluide (100) ;
- un composant ; et
- un dispositif (10), au moyen duquel le composant est fixé à la conduite de fluide (100) ;
**caractérisé en ce que** le dispositif (10) est réalisé selon l'une quelconque des revendications précédentes.

5. Procédé de fixation d'un composant à une conduite de fluide (100) au moyen d'un dispositif (10) selon l'une quelconque des revendications 1 à 3 pour fixer un composant à une conduite de fluide (100), comprenant les étapes suivantes :
- le positionnement d'une section de la conduite de fluide (100) à l'intérieur d'une zone de réception de conduite (14) d'un boîtier (12) du dispositif (10) ; et
- le positionnement du composant dans une zone de réception de composant (16) du boîtier (12) du dispositif (10) ;
**caractérisé par** l'étape suivante :
- la déformation du boîtier (12) du dispositif (10) pour fixer par complémentarité de forme et/ou par adhérence la section de la conduite de fluide (100) dans la zone de réception de conduite (14) du boîtier (12).

6. Procédé selon la revendication 5, **caractérisé en ce que** la déformation du boîtier (12) du dispositif (10) comprend la déformation de deux barrettes de fixation (18a, 18b) opposées du boîtier (12), la section de la conduite de fluide (100) qui se trouve dans la zone de réception de conduite (14) du boîtier (12) étant positionnée entre les barrettes de fixation (18a, 18b).

7. Procédé selon la revendication 6, **caractérisé en ce que** la déformation des deux barrettes de fixation (18a, 18b) opposées du boîtier (12) conduit à
- une déformation plastique des barrettes de fixation (18a, 18b) du boîtier (12) ;
- une déformation élastique et/ou plastique de la section de la conduite de fluide (100) qui se trouve dans la zone de réception de conduite (14) du boîtier (12) ; et/ou
- un sertissage et/ou un matage de la section de la conduite de fluide (100) qui se trouve dans la zone de réception de conduite (14) du boîtier (12) entre les barrettes de fixation (18a, 18b).
